# EUROPEAN PATENT APPLICATION

(11) **EP 4 557 623 A1**
(43) Date of publication of application: **21.05.2025**
(21) Application number: 23854288.0
(22) Date of filing: 08.08.2023
(51) Int. Cl.: H04B 1/7163

(54) **COMMUNICATION METHOD AND ELECTRONIC DEVICE**

(30) Priority: 17.08.2022 CN 202210988251
(71) Applicant: Huawei Technologies Co., Ltd., Shenzhen, Guangdong 518129 (CN)
(72) Inventor: ZHU, Yanhong, Shenzhen, Guangdong 518129 (CN); DING, Rentian, Shenzhen, Guangdong 518129 (CN)
(74) Representative: Maiwald GmbH
(86) International application number: PCT/CN2023/111827
(87) International publication number: WO 2024/037385

(57) **Abstract**

Embodiments of this application provide a communication method and an electronic device. In the method, the electronic device may determine whether a first data frame and a second data frame need to be transmitted concurrently, where the first data frame is used by the electronic device to perform positioning, and the second data frame is used by the electronic device to perform radar sensing; and when the first data frame and the second data frame need to be transmitted concurrently, transmits a third data frame, where the third data frame includes content of the first data frame and content of the second data frame. In embodiments of this application, a frame structure in which a radar frame and a positioning frame coexist is designed. This can implement concurrent transmission of the positioning frame and the radar frame, without a need to perform switching between a positioning function and a radar sensing function, and avoid missed transmission of the radar frame and the positioning frame, so that positioning accuracy and radar sensing accuracy are high.

## Description

This application claims priority to Chinese Patent Application No. 202210988251.X, filed with the China National Intellectual Property Administration on August 17, 2022 and entitled "COMMUNICATION METHOD AND ELECTRONIC DEVICE", which is incorporated herein by reference in its entirety.

### TECHNICAL FIELD

Embodiments of this application relate to the field of communication technologies, and in particular, to a communication method and an electronic device.

### BACKGROUND

An impulse radio ultra-wideband (impulse radio ultra-wideband, IR-UWB) technology can be used for both high-precision positioning and radar sensing. Currently, there is no shortage of stand-alone IR-UWB positioning devices or stand-alone IR-UWB radar sensing devices, but there is a shortage of IR-UWB devices that have both a positioning capability and a radar sensing capability. The devices that have both the positioning capability and the radar sensing capability may be widely used in scenarios such as a whole-house smart home and a smart factory. Because different components inside the device are used when the device performs positioning and radar sensing, the device needs to control component switching during function switching.

At present, duration required for component switching is long, and is greater than duration of a data frame for positioning and duration of a radar frame. Consequently, component switching causes missed transmission of some data frames for positioning and some radar frames, affecting positioning accuracy and radar sensing accuracy.

### SUMMARY

Embodiments of this application provide a communication method and an electronic device, to design a frame structure in which a data frame for positioning and a radar frame coexist, so that positioning accuracy and radar sensing accuracy are high.

According to a first aspect, an embodiment of this application provides a communication method. The communication method may be performed by an electronic device or a chip in an electronic device. The following uses the electronic device as an example for description. In the method, the electronic device determines whether a first data frame and a second data frame need to be transmitted concurrently, where the first data frame is used by the electronic device to perform positioning, and the second data frame is used by the electronic device to perform radar sensing. When the first data frame and the second data frame need to be transmitted concurrently, the electronic device may transmit a third data frame, where the third data frame includes content of the first data frame and content of the second data frame.

Another electronic device communicating with the electronic device may receive the third data frame, obtain, through parsing, the content, of the first data, in the third data frame, and respond to the electronic device, so as to implement that the electronic device positions the another electronic device. In addition, because the third data frame includes the content of the second data frame, after transmitting the third data frame, the electronic device may receive a radar signal reflected by an ambient environment of the electronic device, to implement a radar sensing function of the electronic device.

In embodiments of this application, a structure of a data frame in which a data frame for positioning and a radar pulse coexist may be designed, that is, a structure of a data frame in which a positioning frame and a radar frame coexist is designed, so that the positioning frame and the radar frame can be transmitted concurrently, and both the radar sensing function and a positioning function can be implemented. In this application, switching between the positioning function and the radar sensing function does not need to be performed, and missed transmission of the radar frame and the positioning frame does not occur, so that positioning accuracy and radar sensing accuracy are high.

It should be understood that, when the first data frame and the second data frame do not need to be transmitted concurrently, the electronic device may transmit the first data frame or the second data frame. For example, the electronic device performs positioning by using an IR-UWB technology, and the electronic device transmits the first data frame. In this case, for the first data frame, refer to a data frame defined in 802.15.4z. When the electronic device transmits the second data frame, the electronic device may transmit a radar pulse.

In a possible implementation, second data frames are periodically transmitted. When transmitting the first data frame, the electronic device may detect whether there is a to-be-transmitted second data frame overlapping the first data frame. If there is a to-be-transmitted second data frame overlapping the first data frame, the electronic device determines that the first data frame and the second data frame need to be transmitted concurrently. In addition, when transmitting the second data frame, the electronic device may detect whether there is a to-be-transmitted first data frame overlapping the second data frame. If there is a to-be-transmitted first data frame overlapping the second data frame, the electronic device may determine that the first data frame and the second data frame need to be transmitted concurrently.

The following describes a structure of the third data frame designed in embodiments of this application.

When determining that the first data frame and the second data frame need to be transmitted concurrently, the electronic device may generate the third data frame, to transmit the third data frame.

In a possible implementation, the electronic device may embed the content of the second data frame at a preset position in the first data frame, to obtain the third data frame; or the electronic device may arrange content of the second data frame at the head or the tail of the first data frame, to obtain the third data frame. In an embodiment, the head or the tail of the first data frame may also be referred to as the preset position of the first data frame.

In a first case, the electronic device may arrange the content of the second data frame at the head or the tail of the first data frame.

In a possible implementation, the first data frame includes a preamble sequence, and in the third data frame, the content of the second data frame is before the preamble sequence. For example, the preamble sequence is a field at the head of the first data frame. That the electronic device arranges the content of the second data frame before the preamble sequence means that the electronic device arranges the content of the second data frame at the head of the first data frame. In this implementation, the first data frame may be an SP0 frame, an SP1 frame, an SP2 frame, or an SP3 frame.

In a possible implementation, the first data frame includes a payload, and in the third data frame, the content of the second data frame is after the payload. For example, the payload is a field at the tail of the first data frame. That the electronic device arranges the content of the second data frame after the payload means that the electronic device arranges the content of the second data frame at the tail of the first data frame. In this implementation, the first data frame may be an SP0 frame or an SP1 frame.

In a possible implementation, the first data frame includes encrypted data, and in the third data frame, the content of the second data frame is after the encrypted data. For example, the encrypted data is a field at the tail of the first data frame. That the electronic device arranges the content of the second data frame after the encrypted data means that the electronic device arranges the content of the second data frame at the tail of the first data frame. In this implementation, the first data frame may be an SP3 frame or an SP2 frame. For example, the encrypted data may be a scrambled timestamp sequence.

In the foregoing possible implementations, the electronic device does not change a structure of the first data frame, but adds the second data frame to the head or the tail of the first data frame, so that concurrent transmission of the first data frame and the second data frame can be implemented.

"In the first case", when the first data frame and the second data frame need to be transmitted concurrently, if the first data frame is earlier than the second data frame, the electronic device may arrange the content of the second data frame at the tail of the first data frame; and when the first data frame and the second data frame need to be transmitted concurrently, if the first data frame is later than the second data frame, the electronic device may arrange the content of the second data frame at the head of the first data frame.

Because the second data frames are periodically transmitted, a transmission period of the second data frames may be ensured as much as possible without changing the structure of the first data frame, so that radar sensing accuracy is ensured.

In a second case, the electronic device may embed the content of the second data frame at the preset position in the first data frame.

In a possible implementation, the first data frame includes encrypted data, and the encrypted data includes at least two segments. The electronic device may configure at least one segment of the encrypted data to carry the content of the second data frame, that is, at least one segment in encrypted data of the third data frame is used to carry the content of the second data frame.

In this implementation, after the electronic device transmits the third data frame, regardless of whether the another electronic device that receives the third data frame can parse a radar frame in the encrypted data, this does not affect parsing of the third data frame by the another electronic device to obtain the content of the first data frame, to implement the positioning function.

In a possible implementation, the electronic device may arrange the radar frame after any field in the first data frame. For example, when the first data frame includes a start-of-frame delimiter or a payload packet header, the electronic device may arrange the radar frame after the start-of-frame delimiter or the payload packet header.

In this implementation, the electronic device and the another electronic device that communicate with each other may know in advance where the second data frame is embedded in the first data frame, and when receiving the third data frame, the another electronic device may parse a corresponding field in the third data frame to obtain content in the first data frame.

In a third case, the electronic device may embed the content of the first data frame at a preset position in the second data frame, to obtain the third data frame. For example, the electronic device may embed the content of the first data frame at any position in the second data frame, or arrange the first data frame at the tail or the head of the second data frame.

In a possible implementation, in order to ensure that a period of transmitting the second data frames by the electronic device is unchanged, so as to ensure radar sensing accuracy, when the first data frame and the second data frame need to be transmitted concurrently, the electronic device may use a format of the third data frame in "the first case" to "the third case", and ensure that the transmission period of the second data frames is unchanged (that is, a start moment of the second data frame is adapted to the transmission period of the second data frames).

In an embodiment, the content of the second data frame includes: a phase of a radar pulse, an interval between two adjacent radar pulses, duration of the radar pulse, and a modulation scheme of the radar pulse. In this way, the electronic device may transmit a radar pulse based on the content of the second data frame, to implement the radar sensing function.

According to a second aspect, an embodiment of this application provides an electronic device. The electronic device may include a processor and a memory. The memory is configured to store computer-executable program code. The program code includes instructions. The processor executes the instructions, to enable the electronic device to perform the method according to the first aspect.

According to a third aspect, an embodiment of this application provides a computer program product including instructions. When the computer program product runs on a computer, the computer is enabled to perform the method according to the first aspect.

According to a fourth aspect, an embodiment of this application provides a computer-readable storage medium. The computer-readable storage medium stores instructions. When the instructions are run on a computer, the computer is enabled to perform the method according to the first aspect.

For beneficial effect of possible implementations of the second aspect to the fourth aspect, refer to beneficial effect brought by the first aspect. Details are not described herein again.

### BRIEF DESCRIPTION OF DRAWINGS

FIG. 1A is a diagram of a structure of an electronic device that has an IR-UWB positioning function;
FIG. 1B is a diagram of a structure of an electronic device that has an IR-UWB radar sensing function;
FIG. 2 is a diagram of a structure of a data frame defined in the 802.15.4z protocol;
FIG. 3 is a diagram of a modulation scheme of an SP1 frame defined in the 802.15.4z protocol;
FIG. 4 is a diagram of a structure of a radar frame;
FIG. 5 is a diagram of radar pulse transmission;
FIG. 6 is a diagram of a structure of a data frame in which a positioning frame and a radar frame coexist;
FIG. 7 is a schematic flowchart of an embodiment of a communication method according to an embodiment of this application;
FIG. 8 is a diagram of communication between a device 1 and a device 2 according to an embodiment of this application;
FIG. 9 is a diagram of a structure and a modulation scheme of a radar frame according to an embodiment of this application;
FIG. 10A is a diagram of a structure and a modulation scheme of a third data frame according to an embodiment of this application;
FIG. 10B is a diagram of a structure and a modulation scheme of another third data frame according to an embodiment of this application;
FIG. 10C is a diagram of a structure and a modulation scheme of another third data frame according to an embodiment of this application;
FIG. 10D is a diagram of a structure and a modulation scheme of another third data frame according to an embodiment of this application;
FIG. 10E is a diagram of a structure and a modulation scheme of another third data frame according to an embodiment of this application;
FIG. 10F is a diagram of a structure and a modulation scheme of another third data frame according to an embodiment of this application;
FIG. 10G is a diagram of a structure and a modulation scheme of another third data frame according to an embodiment of this application;
FIG. 10H is a diagram of a structure and a modulation scheme of another third data frame according to an embodiment of this application;
FIG. 10I is a diagram of a structure and a modulation scheme of another third data frame according to an embodiment of this application;
FIG. 11 is another diagram of communication between a device 1 and a device 2 according to an embodiment of this application;
FIG. 12A is a diagram of a structure and a modulation scheme of another third data frame according to an embodiment of this application;
FIG. 12B is a diagram of a structure and a modulation scheme of another third data frame according to an embodiment of this application;
FIG. 12C is a diagram of a structure and a modulation scheme of another third data frame according to an embodiment of this application;
FIG. 13 is another diagram of communication between a device 1 and a device 2 according to an embodiment of this application; and
FIG. 14 is a diagram of a structure of an electronic device according to an embodiment of this application.

### DESCRIPTION OF EMBODIMENTS

Definitions of terms in embodiments of this application are as follows:
Positioning: An electronic device positions another electronic device, which can also be understood as that the electronic device obtains a distance and an angle from the another electronic device.

Radar sensing: An electronic device emits a radar pulse and senses an ambient environment of the electronic device through the reflected radar pulse. For example, in an uncrewed driving scenario, a vehicle may transmit a radar pulse, to sense an obstacle around the vehicle, to ensure safe driving.

Positioning frame: a data frame exchanged in a process in which an electronic device positions another electronic device. The positioning frame includes a data frame transmitted when the electronic device positions the another electronic device, or a data frame fed back by the another electronic device to the electronic device when the another electronic device receives a data frame from the electronic device.

Secure positioning: A positioning frame for positioning includes encrypted data, to improve security of the positioning frame and ensure positioning security. Non-secure positioning is relative to secure positioning, that is, a positioning frame for positioning does not include encrypted data.

Radar frame: a data frame used by an electronic device to generate a radar pulse when the electronic device performs radar sensing.

It should be understood that, in embodiments of this application, to facilitate distinguishing between a data frame for positioning and a data frame for radar sensing, the data frame for positioning is referred to as a positioning frame, the data frame for radar sensing is referred to as a radar frame, and both the positioning frame and the radar frame are data frames.

Concurrent transmission of a positioning frame and a radar frame: An electronic device has both a positioning function and a radar sensing function, and the electronic device needs to transmit a positioning frame for positioning, and transmit a radar frame for radar sensing. In other words, the electronic device needs to transmit both a positioning frame and a radar frame.

The electronic device in embodiments of this application may be referred to as a device that has the positioning function and the radar sensing function, like user equipment (user equipment, UE) or a terminal (terminal). For example, the electronic device may be a mobile phone, a tablet computer (portable android device, PAD), a personal digital processing (personal digital assistant, PDA), a handheld device with a wireless communication function, a computing device, a vehicle-mounted device or a wearable device, a virtual reality (virtual reality, VR) terminal device, an augmented reality (augmented reality, AR) terminal device, a wireless terminal in industrial control (industrial control), a wireless terminal in smart home (smart home), an internet of things (internet of things, IoT) device, a smart speaker device, a smart large screen or smart television device, a remote control device, a router, a smart door lock, an electronic cat eye, a smart household appliance (such as an air conditioner, a refrigerator, a washing machine, a dryer, an electric fan, an electric heater, and a floor sweeping robot), a household or vehicle radar device, and the like. A form of the electronic device is not specifically limited in embodiments of this application.

Impulse radio ultra-wideband (impulse radio ultra-wideband, IR-UWB) is a radio technology that uses a narrow pulse and a large bandwidth. The large bandwidth corresponds to high range resolution. A device that has an IR-UWB positioning function can accurately distinguish a direct path and a reflection path in a multipath environment, and achieves high positioning accuracy. In addition, IR-UWB is also a common radar detection technology. A device that has an IR-UWB radar sensing function can accurately distinguish a radar reflected wave from another interference wave, and achieves high radar sensing accuracy.

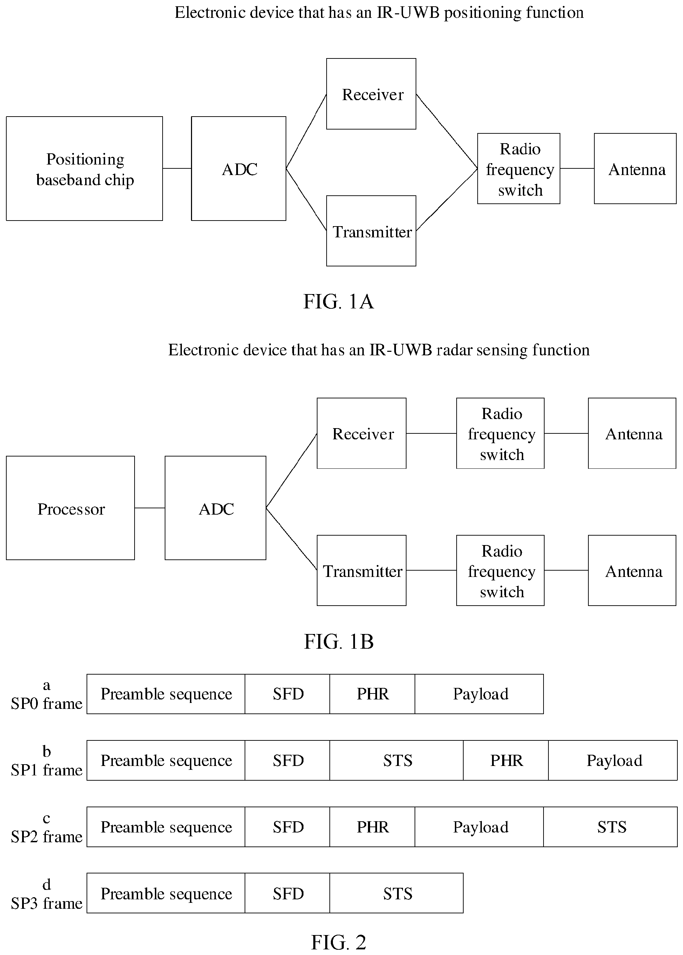

Currently, an electronic device that has only an IR-UWB positioning function and an electronic device that has only an IR-UWB radar sensing function already exist. Refer to descriptions in FIG. 1A and FIG. 1B.

FIG. 1A is a diagram of a structure of an electronic device that has an IR-UWB positioning function. Refer to FIG. 1A. The electronic device may include a positioning baseband chip, an analog-to-digital converter (analog-to-digital converter, ADC), a receiver, a transmitter, a radio frequency switch, and an antenna. The receiver and the transmitter are connected to a same antenna by using the radio frequency switch. In a positioning scenario, the electronic device needs to communicate with another electronic device, the receiver and the transmitter are turned on in a time-division manner, and the receiver needs to enable an automatic gain control (automatic gain control, AGC) function, to automatically adjust a gain. It should be understood that FIG. 1A is a simple representation of the structure of the electronic device, and does not impose a limitation on the structure of the electronic device.

For example, the electronic device may turn on the transmitter to transmit a positioning frame to the another electronic device. After transmitting the positioning frame, the electronic device turns off the transmitter and turns on the receiver, to receive a positioning frame fed back by the another electronic device, so as to implement positioning. A positioning principle of IR-UWB is not described in detail in embodiments of this application.

FIG. 1B is a diagram of a structure of an electronic device that has an IR-UWB radar sensing function. Refer to FIG. 1B. The electronic device may include a processor, an analog-to-digital converter, a receiver, a transmitter, a radio frequency switch, and an antenna. A radar sensing scenario differs from the scenario in FIG. 1A as follows: the receiver and the transmitter need to be simultaneously turned on, and the receiver and the transmitter are respectively connected to different antennas by using respective radio frequency switches. Because strength of a radar reflected wave is weak, the receiver needs to disable an AGC function and configure a maximum gain, so that the radar reflected wave can be accurately obtained to perform radar sensing.

Currently, electronic devices are evolving toward a direction of combining the positioning function and the radar sensing function. If an electronic device has both the positioning function and the radar sensing function, the electronic device may be widely applied to scenarios such as a whole-house smart home and a smart factory. According to the structures of the electronic devices shown in FIG. 1A and FIG. 1B, it can be learned that in the positioning scenario and the radar sensing scenario, the receiver and the transmitter of the electronic device are controlled differently, and a gain is also controlled differently. If an electronic device intends to implement both the positioning function and the radar sensing function, the electronic device needs to control switches of a receiver and a transmitter, and adjust a gain, so that the electronic device implements switching between the positioning function and the radar sensing function. In an embodiment, the receiver and the transmitter may be referred to as components inside the electronic device.

Time of switching between the positioning function and the radar sensing function is usually at a millisecond level, and is far greater than duration of a positioning frame and duration of a radar frame. Missed transmission of a positioning frame and a radar frame may occur during switching between the positioning function and the radar sensing function. This affects positioning accuracy and radar sensing accuracy.

Before a communication method provided in embodiments of this application is described, a structure of a data frame, a modulation scheme of the data frame, and a scenario of concurrent transmission of a positioning frame and a radar frame that are defined in the 802.15.4z protocol are first described.

Embodiments of this application relate to a data frame defined in the 802.15.4z protocol. As shown in a to d in FIG. 2, the 802.15.4z protocol defines data frames of three structures: an STS packet configuration 0 (STS packet configuration 0, SP0) frame, an STS packet configuration 1 (STS packet configuration 1, SP1) frame, an STS packet configuration 2 (STS packet configuration 2, SP2) frame, and an STS packet configuration 3 (STS packet configuration 3, SP3) frame.

As shown in a in FIG. 2, the SP0 frame includes four fields: a preamble (preamble) sequence, a start-of-frame delimiter (start-of-frame delimiter, SFD), a payload packet header (payload header, PHR), and a payload (payload). The preamble is used for clock synchronization between a transmitter and a receiver, and the SFD is used for determining a start position of a data frame. The PHR is used to configure a modulation rate, a data length, and the like of a payload, and the payload may carry a non-encrypted timestamp or signaling interaction information.

As shown in b in FIG. 2, the SP1 frame is obtained by adding a scrambled timestamp sequence (scrambled timestamp sequence, STS) to the SP0 frame, and the STS is used to carry an encrypted timestamp. The SP1 frame is used in a scenario in which an electronic device needs to perform secure positioning and signaling interaction. As shown in c in FIG. 2, compared with the SP1 frame, the SP2 frame also includes a preamble sequence, an SFD, an STS, a PHR, and a payload. A difference from the SP1 frame lies in that the STS in the SP2 frame is positioned after the payload. The SP2 frame is also used in the scenario in which the electronic device needs to perform secure positioning and signaling interaction. As shown in d in FIG. 2, the SP3 frame includes a preamble, an SFD, and an STS, and the SP3 frame is used in a scenario in which the electronic device needs to perform secure positioning but does not need to perform signaling interaction.

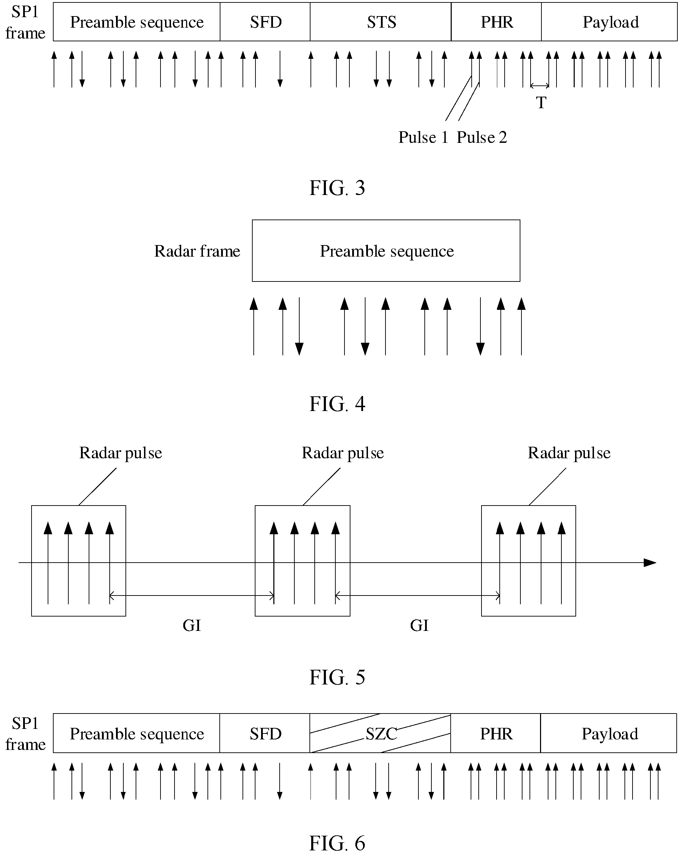

Fields included in the SP1 frame and the SP2 frame are the most complete. In FIG. 3, the SP1 frame is used as an example to describe a modulation scheme of the electronic device for a positioning frame. In FIG. 3, an arrow indicates a pulse, a pulse interval between pulses indicates 0 (that is, no pulse), an upward arrow indicates 1 (that is, a positive pulse), and a downward arrow indicates -1 (that is, a negative pulse). As shown in FIG. 3, a preamble field, an SFD field, and an STS field in the positioning frame are all modulated by using a random sequence, and a PHR field and a payload field are modulated by using contiguous pulses with a large guard interval. As shown in FIG. 3, a guard interval between a pulse 1 and a pulse 2 is small, the pulse 1 and the pulse 2 may be considered as contiguous pulses, and a large interval (for example, T) between adjacent contiguous pulses is referred to as a large guard interval.

In an embodiment, a radar frame may be designed, to enable the electronic device to transmit a positioning frame and a radar frame. As shown in FIG. 4, only a preamble field is reserved in a data frame, and is modulated by using an Ipatov (Ipatov) sequence. The modulation scheme is pseudo-random spread spectrum modulation, and a modulated pulse sequence has a good autocorrelation. A radar frame shown in FIG. 4 is applicable to a sensing technology based on a channel impulse response (channel impulse response, CIR).

In this embodiment, although the electronic device may transmit the positioning frame and the radar frame to implement a positioning function and a radar sensing function, because structures of the radar frame and the positioning frame are different, the electronic device still needs to switch between the positioning function and the radar sensing function when transmitting the positioning frame and the radar frame. This causes missed transmission of the positioning frame and the radar frame.

In an embodiment, a frame structure of a pulse train (pulse burst) is further designed, to enable the electronic device to transmit a positioning frame and a radar frame. As shown in FIG. 5, the transmitter may continuously transmit a plurality of radar pulses to ensure pulse emission energy, and use a long guard interval (guard interval, GI) to transmit the radar pulses.

In this embodiment, the transmitter continuously transmits the plurality of pulses, increasing a blind spot of a radar. Consequently, the electronic device cannot detect a short-distance target. For example, four radar pulses are transmitted continuously at a UWB of a 500 MHz bandwidth. In a case in which recovery time of the receiver is not considered, the blind spot is at least 1.2 meters, that is, the electronic device cannot detect a target at a distance of 1.2 meters around. In addition, a structure of the radar frame and a structure of the positioning frame that are defined in this embodiment differ greatly, and the electronic device still needs to switch between a positioning function and a radar sensing function when transmitting the positioning frame and the radar frame. This also causes missed transmission of the positioning frame and the radar frame.

In an embodiment, a radar frame is further designed, to implement concurrent transmission of a positioning frame and a radar frame. For example, all content of the STS field in the SP1 frame may be replaced with repetitive Ipatov codes (repetitive Ipatov codes) or a zero-sum cross-correlation (zero-sum cross-correlation, SZC) sequence, to transmit the positioning frame and the radar frame. In FIG. 6, an example in which all content of the STS field in the SP1 frame is replaced with the SZC sequence is used for description.

In this embodiment, although concurrent transmission of the positioning frame and the radar frame is implemented, and an STS field defined in the 802.15.4z protocol is modified, the SP1 frame cannot implement secure positioning.

Based on the problems in the foregoing embodiments, embodiments of this application need to resolve a problem of how to simultaneously complete two tasks (a positioning task and a radar sensing task) in one data frame when positioning and radar sensing coexist, that is, transmit both a positioning frame and a radar frame, to avoid missed transmission of the positioning frame and the radar frame during switching between a positioning function and a radar sensing function. In embodiments of this application, a frame structure in which a radar frame and a positioning frame coexist is designed, to be specific, one data frame is transmitted, to achieve a purpose of concurrently transmitting a positioning frame and a radar frame. Because the positioning frame is defined in the 802.15.4z protocol, when the frame structure is designed, it needs to be ensured that the positioning frame is compatible with the 802.15.4z protocol. In addition, because radar pulses are periodically transmitted, a radar pulse needs to be fused into a proper position of the positioning frame. In addition, positioning includes secure positioning and non-secure positioning. Embodiments of this application need to separately resolve how to fuse a radar pulse into a positioning frame in the two positioning modes.

Based on the foregoing concept, embodiments of this application provide a communication method, and a frame structure in which a radar frame and a positioning frame coexist is designed. This can implement concurrent transmission of the positioning frame and the radar frame, without a need to perform switching between a positioning function and a radar sensing function, and avoid missed transmission of the radar frame and the positioning frame, so that positioning accuracy and radar sensing accuracy are high. In addition, in embodiments of this application, the frame structure in which the radar frame and the positioning frame coexist is correspondingly designed for an SP0 frame, an SP1 frame, and an SP3 frame, so that a non-secure positioning function and the radar sensing function can coexist, and a security positioning function and the radar sensing function can coexist.

The communication method provided in embodiments of this application is described below in conjunction with specific embodiments. The following several embodiments may be combined with each other, and a same or similar concept or process may not be described repeatedly in some embodiments.

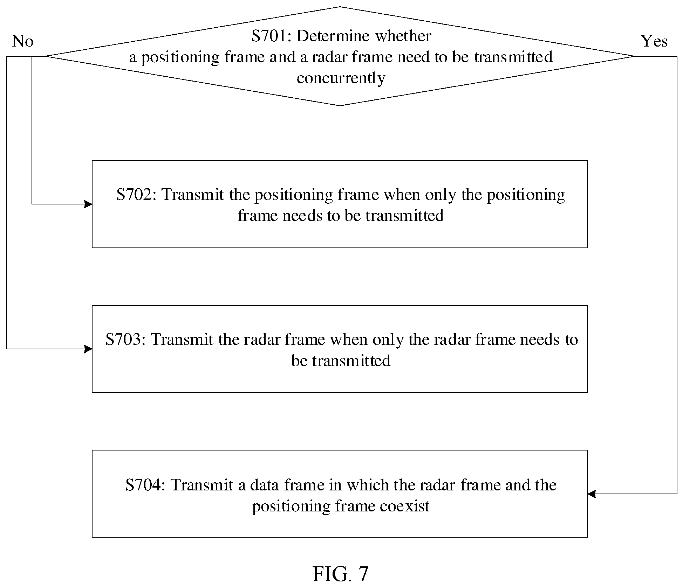

FIG. 7 is a schematic flowchart of an embodiment of a communication method according to an embodiment of this application. Refer to FIG. 7. The communication method provided in this embodiment of this application may include the following steps.

S701: Determine whether a positioning frame and a radar frame need to be transmitted concurrently. If the positioning frame and the radar frame do not need to be transmitted concurrently, perform S702 or S703; or if the positioning frame and the radar frame need to be transmitted concurrently, perform S704.

The positioning frame may be an SP0 frame, an SP1 frame, or an SP3 frame. An electronic device may negotiate a specific type of positioning frame to be transmitted, when establishing a connection to another electronic device; or an electronic device may negotiate, during interaction with another electronic device, a specific type of positioning frame to be transmitted. A manner in which the electronic device determines a specific type of positioning frame to be transmitted is not described in detail in embodiments of this application.

The radar frame includes related information for generating a radar pulse, and the electronic device may generate based on the related information and transmit the radar pulse. For example, the radar frame includes a phase of the radar pulse, an interval between two adjacent radar pulses, duration of the radar pulse, and a modulation scheme of the radar pulse. The phase of the radar pulse may be positive or negative. For example, a positive pulse indicates that a phase of the radar pulse is positive, and a negative pulse indicates that a phase of the radar pulse is negative. The duration of the radar pulse is equal to duration of the radar frame.

The radar pulse is periodically transmitted. That is, the radar frame is periodically transmitted. The positioning frame is transmitted when there is a need for positioning. In an example, the electronic device may schedule the positioning frame in advance based on an original transmission period of the radar frame, to cause the positioning frame not to overlap the radar frame, in other words, to ensure as far as possible that the positioning frame and the radar frame are not transmitted concurrently. In an example, when transmitting the radar frame, the electronic device may detect whether there is a to-be-transmitted positioning frame overlapping the radar frame, or when transmitting the positioning frame, the electronic device may detect whether there is a to-be-transmitted radar frame overlapping the positioning frame. If there is a to-be-transmitted positioning frame overlapping the radar frame, or there is a to-be-transmitted radar frame overlapping the positioning frame, it indicates that the positioning frame and the radar frame need to be transmitted concurrently. In this case, the electronic device may transmit a data frame in which the positioning frame and the radar frame coexist. Refer to related descriptions in S704. If there is no to-be-transmitted positioning frame overlapping the radar frame, or there is no to-be-transmitted radar frame overlapping the positioning frame, it indicates that the positioning frame and the radar frame do not need to be transmitted concurrently. In this case, the electronic device may transmit only the positioning frame or transmit only the radar frame. Refer to related descriptions in S702 and S703.

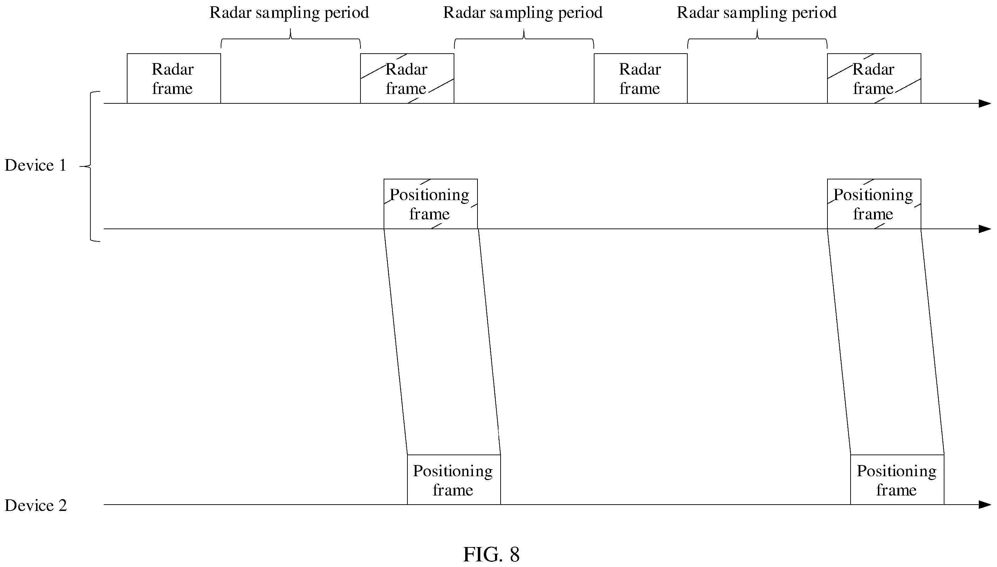

In FIG. 8, communication between a device 1 and a device 2 is used as an example for description. The device 1 has a positioning function and a radar sensing function, and the device 2 has a positioning function. In a positioning scenario, the device 1 or the device 2 may serve as a transmit end of a positioning frame. When the device 1 is a transmit end of the positioning frame, the device 2 is a responder of the positioning frame; or when the device 2 is a transmit end of the positioning frame, the device 1 is a responder of the positioning frame. Refer to FIG. 8. When the device 1 performs radar sensing, the device 1 may periodically transmit a radar frame. After transmitting the radar frame, the device 1 may sample a radar reflected wave, that is, a radar sampling period starts. If there is a to-be-transmitted positioning frame overlapping the radar frame, or there is a to-be-transmitted radar frame overlapping the positioning frame, the positioning frame and the radar frame need to be transmitted concurrently. In FIG. 8, a positioning frame in shadow and a radar frame in shadow indicate a positioning frame and a radar frame that need to be transmitted concurrently.

S702: Transmit the positioning frame when only the positioning frame needs to be transmitted. It should be understood that, when only the positioning frame needs to be transmitted, a positioning frame with a structure of a positioning frame defined in the 802.15.4z protocol may be transmitted. In an embodiment, the positioning frame may be referred to as a first data frame.

S703: Transmit the radar frame when only the radar frame needs to be transmitted.

A radar frame is defined in embodiments of this application, where the radar frame includes related information for generating a radar pulse. For the related information, refer to related descriptions in S701. In an embodiment, the radar frame may be referred to as a second data frame.

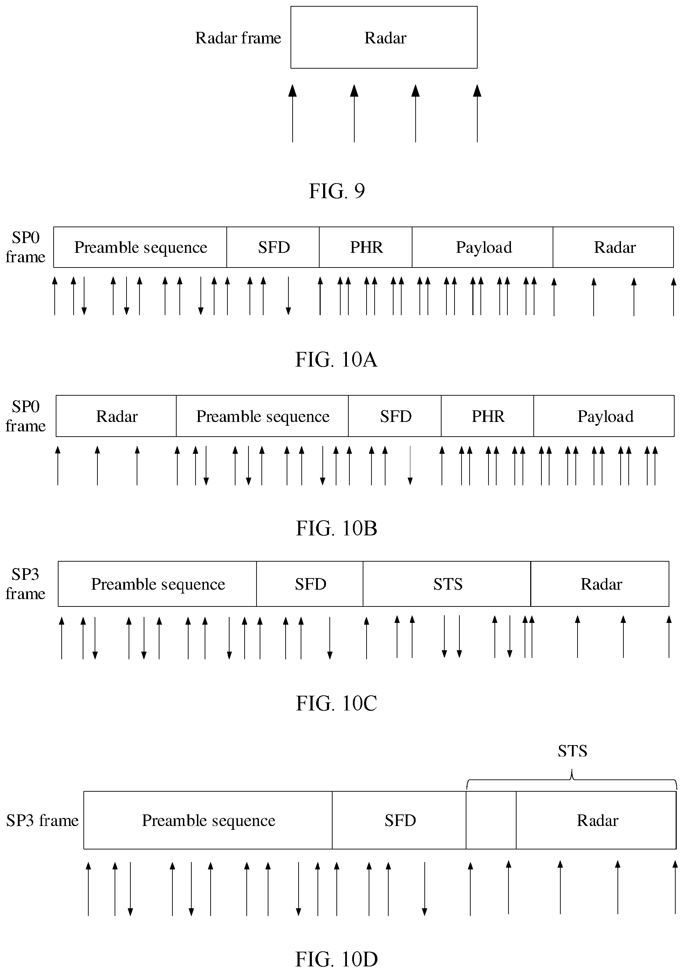

FIG. 9 is a diagram of a structure and a modulation scheme of a radar frame according to an embodiment of this application. For example, duration of the radar frame may be 50 µs, an interval between two adjacent radar pulses is at least 8 ns, and the radar frame is modulated by using equally spaced in-phase pulses. It should be understood that in FIG. 9, an example in which the modulated in-phase pulses are positive pulses is used for description.

S704: Transmit the data frame in which the radar frame and the positioning frame coexist.

In an embodiment, the data frame in which the radar frame and the positioning frame coexist may be referred to as a third data frame. In other words, the third data frame includes content of the first data frame and content of the second data frame, that is, the third data frame includes content of the positioning frame and content of the radar frame.

For example, the content of the radar frame may be embedded at a preset position in the positioning frame, to obtain the third data frame; or the content of the radar frame may be arranged at the head or the tail of the positioning frame, to obtain the third data frame. In an embodiment, the head and the tail of the positioning frame may also be referred to as preset positions in the positioning frame.

Positioning frames of three types of structures are defined in the 802.15.4z protocol. Therefore, a third data frame adapted to each type of positioning frame may be designed in embodiments of this application, so that concurrent transmission of a radar frame and a positioning frame is implemented while compatibility with the structures of the positioning frames defined in the 802.15.4z protocol is ensured.

In a first case, in a non-secure positioning scenario, the positioning frame is an SP0 frame.

In an embodiment, refer to FIG. 10A. A radar frame (or a field in the radar frame) may be arranged after a payload field in the SP0 frame, and a structure of the SP0 frame remains unchanged. For the SP0 frame, refer to related descriptions in FIG. 2. For the radar frame, refer to related descriptions in FIG. 9. A preamble field and an SFD field in the SP0 frame may be modulated by using a random sequence, and a PHR field and a payload field in the SP0 frame may be modulated by using contiguous pulses with a large guard interval. Refer to related descriptions in FIG. 3. Fields in the radar frame may be modulated by using equally spaced in-phase pulses. Refer to related descriptions in FIG. 9. In a third data frame shown in FIG. 10A, the content of the radar frame is arranged at the tail of the positioning frame.

In an embodiment, refer to FIG. 10B. A radar frame may be arranged before a preamble field in the SP0 frame, and a structure of the SP0 frame remains unchanged. For the radar frame, refer to related descriptions in FIG. 10A. For a modulation scheme of the SP0 frame and a modulation scheme of the radar frame, refer to related descriptions in 10A. In a third data frame shown in FIG. 10B, the content of the radar frame is arranged at the head of the positioning frame.

In an embodiment, a structure of the data frame in which the radar frame and the positioning frame coexist may be determined based on an order of the radar frame and the positioning frame. For example, refer to FIG. 8. If the radar frame is before the positioning frame, the radar frame may be arranged before a preamble field in the SP0 frame. A structure of the third data frame is shown in 10B. If the radar frame is after the positioning frame, the radar frame may be arranged after a payload field in the SP0 frame. A structure of the third data frame is shown in 10A.

In this embodiment, an order of the radar frame and the SP0 frame may be determined based on the order of the radar frame and the positioning frame, so that a transmission period of the radar frame is closer to the original transmission period of the radar frame. This avoids reducing radar sensing accuracy.

In the third data frames shown in FIG. 10A and FIG. 10B, when the radar frame and the positioning frame are transmitted concurrently, physical layer frame structures of the radar frame and the positioning frame are adjacent to each other. That is, the electronic device can implement concurrent transmission of the radar frame and the positioning frame by transmitting the third data frame, without a need to switch between the radar sensing function and the positioning function. This avoids missed transmission of the radar frame or the positioning frame.

In the non-secure positioning scenario, for example, the device 1 transmits a third data frame. When the device 2 receives the third data frame, the device 2 may perform matched filtering based on a preamble in the third data frame, and obtain a positioning frame in the third data frame through parsing, to implement positioning in response to the positioning frame.

In an embodiment, the radar frame may alternatively be arranged after another field in the SP0 frame. For example, the radar frame may be arranged after a preamble field, an SFD field, or a PHR field in the SP0 frame. In this example, a position after the preamble field, the SFD field, or the PHR field in the SP0 frame may be referred to as a preset position in the positioning frame. In this embodiment, electronic devices in communication (the device 1 and the device 2) may know in advance (for example, based on a definition in a protocol) a specific preset position that is in the SP0 frame and at which the radar frame is embedded. Therefore, when receiving a third data frame transmitted by the device 1, the device 2 may parse a corresponding field in the third data frame to obtain content in the SP0 frame.

In a second case, in a secure positioning scenario, the positioning frame is an SP3 frame.

In an embodiment, refer to FIG. 10C. A radar frame may be arranged after an STS field in the SP3 frame, and a structure of the SP3 frame remains unchanged. For the structure of the SP3 frame, refer to related descriptions in FIG. 2. For the radar frame, refer to related descriptions in FIG. 9. A preamble field, an SFD field, and the STS field in the SP3 frame may be modulated by using a random sequence. Refer to related descriptions in FIG. 3. The radar frame may be modulated by using equally spaced in-phase pulses. Refer to related descriptions in FIG. 9. In a third data frame shown in FIG. 10C, the content of the radar frame is arranged at the tail of the positioning frame.

In an embodiment, an STS field in the SP3 frame includes a plurality of segments (segments), and content carried in the segments is the same. In view of this, in this embodiment of this application, the electronic device may design some segments in the STS field in the SP3 frame to carry content of an STS field in the positioning frame, and other segments in the STS field to carry content of the radar frame. Refer to FIG. 10D. For example, the STS field in the SP3 frame includes three segments. First one segment may be configured to carry the content of the STS field in the positioning frame, and last two segments may be configured to carry the content of the radar frame. In a third data frame shown in FIG. 10D, the content of the radar frame is embedded at a preset position in the positioning frame, and the preset position is the STS field in the SP3 frame.

In this embodiment, the electronic device may determine, based on a signal-to-noise ratio of a historically received positioning frame, a quantity of segments in the STS field in the SP3 frame that are configured for the radar frame. When the signal-to-noise ratio of the positioning frame historically received by the electronic device is greater than or equal to a preset signal-to-noise ratio, it indicates that a positioning signal received by the electronic device is strong and positioning is accurate. In this case, more segments in the STS field in the SP3 frame may be configured for the radar frame without affecting positioning accuracy of the electronic device. For example, when the STS field in the SP3 frame includes three segments, first one segment among the segments may be configured to carry the content of the STS field in the positioning frame, and last two segments among the segments may be configured to carry the content of the radar frame.

When the signal-to-noise ratio of the positioning frame historically received by the electronic device is less than a preset signal-to-noise ratio, it indicates that a positioning signal received by the electronic device is weak and positioning is inaccurate. In this case, fewer segments in the STS field in the SP3 frame may be configured for the radar frame, to ensure positioning accuracy of the electronic device. For example, when the STS field in the SP3 frame includes three segments, first one segment among the segments may be configured to carry the content of the STS field in the positioning frame, and last two segments among the segments may be configured to carry the content of the radar frame.

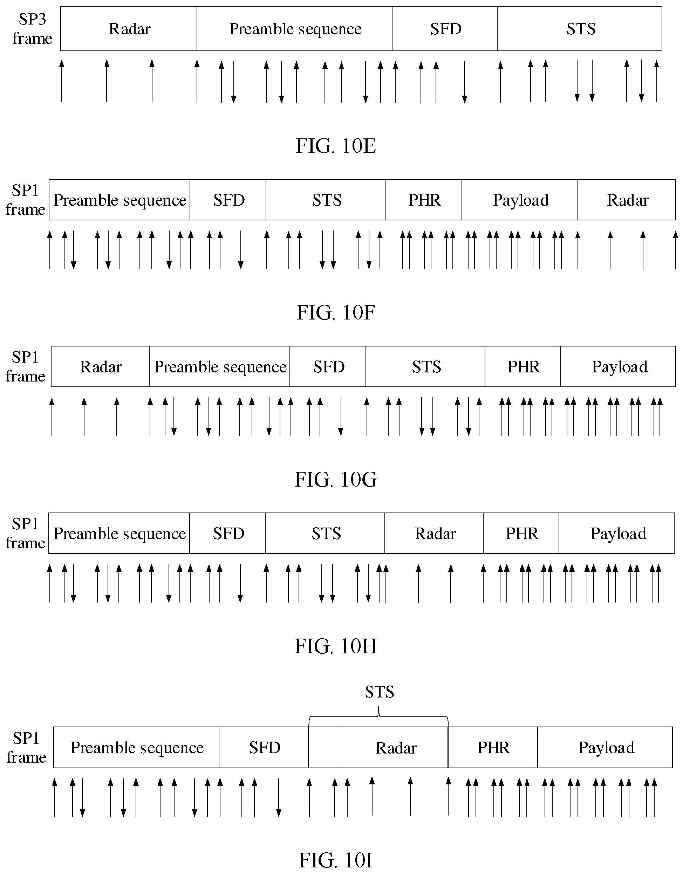

In an embodiment, refer to FIG. 10E. The radar frame may be arranged before a preamble field in the SP3 frame, and a structure of the SP3 frame remains unchanged. For the radar frame, refer to related descriptions in FIG. 10A. For a modulation scheme of the SP3 frame and a modulation scheme of the radar frame, refer to related descriptions in 10A. In a third data frame shown in FIG. 10E, the content of the radar frame is arranged at the head of the positioning frame.

In an embodiment, the electronic device may determine, based on an order of the radar frame and the positioning frame, a structure of the data frame in which the radar frame and the positioning frame coexist. For example, if the radar frame is after the positioning frame, the radar frame may be arranged after an STS field in the SP3 frame, and a structure of a third data frame is shown in FIG. 10C; or a segment for carrying the content of the radar frame is configured in an STS field in the SP3 frame, and a structure of a third data frame is shown in FIG. 10D. If the radar frame is before the positioning frame, the radar frame may be arranged before a preamble field in the SP3 frame. A structure of a third data frame is shown in 10E.

In this embodiment, an order of the radar frame and the SP3 frame in the third data frame may be determined based on the order of the radar frame and the positioning frame, so that a period in which the electronic device transmits the radar frame is closer to the original transmission period of the radar frame. This avoids reducing radar sensing accuracy.

In an embodiment, the radar frame may alternatively be arranged after another field in the SP3 frame. For example, the radar frame may be arranged after a preamble field or an SFD field in the SP3 frame. In this example, a position after the preamble field or the SFD field in the SP3 frame may be referred to as a preset position in the positioning frame. In this embodiment, electronic devices in communication (the device 1 and the device 2) may know in advance a specific preset position that is in the SP3 frame and at which the radar frame is embedded. Therefore, when receiving the third data frame transmitted by the device 1, the device 2 may parse a corresponding field in the third data frame to obtain content in the SP3 frame.

In a third case, in a secure positioning scenario, the positioning frame is an SP1 frame.

The SP1 frame includes a preamble field, a PHR field, a payload field, and an STS field. Therefore, when the SP1 frame needs to be transmitted concurrently with a radar frame, structures of the third data frame in "the first case" and "the second case" may be reused.

In an embodiment, refer to FIG. 10F. The radar frame may be arranged after the payload field in the SP1 frame, and a structure of the SP1 frame remains unchanged. For the radar frame, refer to related descriptions in FIG. 9. The preamble field, an SFD field, and the STS field in the SP1 frame may be modulated by using a random sequence, and the PHR field and the payload field in the SP1 frame may be modulated by using contiguous pulses with a large guard interval. Refer to related descriptions in FIG. 3. The radar frame may be modulated by using equally spaced in-phase pulses. Refer to related descriptions in FIG. 9.

In an embodiment, refer to FIG. 10G. A radar frame may be arranged before the preamble field in the SP1 frame, and a structure of the SP1 frame remains unchanged. For the radar frame, refer to related descriptions in FIG. 10A. For a modulation scheme of the SP1 frame and a modulation scheme of the radar frame, refer to related descriptions in 10A. In a third data frame shown in FIG. 10G, content of the radar frame is arranged at the head of the positioning frame.

In an embodiment, refer to FIG. 10H. The radar frame may be arranged after the STS field in the SP1 frame. For the radar frame, refer to related descriptions in FIG. 9. The preamble field, an SFD field, and the STS field in the SP1 frame may be modulated by using a random sequence. Refer to related descriptions in FIG. 3. The radar frame may be modulated by using equally spaced in-phase pulses. Refer to related descriptions in FIG. 9. In a third data frame shown in FIG. 10G, content of the radar frame is embedded at a preset position in the positioning frame, and the preset position is a position after the STS field in the SP1 frame. In this embodiment, electronic devices in communication (the device 1 and the device 2) may know in advance that the radar frame is embedded after the STS field in the SP1 frame. Therefore, when receiving the third data frame transmitted by the device 1, the device 2 may parse a corresponding field in the third data frame to obtain content in the SP1 frame.

In an embodiment, refer to FIG. 10I. Some segments in the STS field in the SP1 frame may be configured to carry the content of the radar frame. For example, when the STS field in the SP1 frame includes three segments, first one segment of the STS field in the SP1 frame may be configured to carry content of an STS field in the positioning frame, and last two segments may be configured to carry the content of the radar frame. In this embodiment, the electronic device may further determine, based on a signal-to-noise ratio of a historically received positioning frame, a quantity of segments in the STS field in the SP1 frame that are configured for the radar frame. Refer to related descriptions in the foregoing embodiments. In a third data frame shown in FIG. 10I, the content of the radar frame is embedded at a preset position in the positioning frame, and the preset position is an STS field in the SP1 frame. In this embodiment, when receiving the third data frame from the device 1, the device 2 may obtain, through parsing, or cannot obtain, through parsing, the radar frame carried in the last two segments in the STS field, but may obtain, through parsing, the content in the SP1 frame.

In an embodiment, the electronic device may further determine, based on an order of a radar frame and a positioning frame, a structure of a data frame in which the radar frame and the positioning frame coexist. If the radar frame is before the positioning frame, the radar frame may be arranged before the preamble field in the SP1 frame. A structure of a third data frame is shown in 10G. If the radar frame is after the positioning frame, the radar frame may be arranged after the payload field in the SP1 frame, and a structure of a third data frame is shown in FIG. 10F; or the radar frame may be arranged after the STS field in the SP1 frame, and a structure of a third data frame is shown in FIG. 10H; or a field that carries content of the radar frame may be configured in the STS field in the SP1 frame, and a structure of a third data frame is shown in FIG. 10I.

In an embodiment, the radar frame may alternatively be arranged after another field in the SP1 frame. For example, the radar frame may be arranged after the preamble field, an SFD field, or the PHR field in the SP1 frame. Refer to related descriptions of the SP0 frame.

In an embodiment, in a secure positioning scenario, when the positioning frame is an SP2 frame, if the SP2 frame needs to be transmitted concurrently with a radar frame, structures of the third data frames in "the first case" and "the second case" may be reused. Refer to related descriptions of the SP1 frame. For example, the radar frame is arranged before a preamble field in the SP2 frame, or arranged after an STS field in the SP2 frame, or arranged in a segment of an STS field in the SP2 frame, or arranged after a payload field in the SP2 frame. Alternatively, the radar frame may be arranged after another field in the SP2 frame. For example, the radar frame may be arranged after the preamble field, an SFD field, or the PHR field in the SP2 frame. Refer to related descriptions of the SP1 frame.

Fourth, in a non-secure positioning scenario or a secure positioning scenario, the positioning frame is an SP0 frame, an SP1 frame, or an SP3 frame.

For the third data frame designed in "the first case to the third case", based on a structure of the positioning frame, a radar frame is embedded into the positioning frame, or a radar frame is arranged at the head or the tail of the positioning frame. A design of a structure of the third data frame complies with the positioning frame defined in the 802.15.4z protocol, and can ensure that positioning performance of the electronic device is not affected. Because duration of the positioning frame may reach more than hundreds of microseconds, when the radar frame is embedded in the positioning frame or the radar frame is disposed at the head or the tail of the positioning frame, a transmission moment of the radar frame cannot be accurately aligned with an original transmission moment of the radar frame. Especially when a radar sampling period is small, this problem is obvious, and affects radar sensing accuracy.

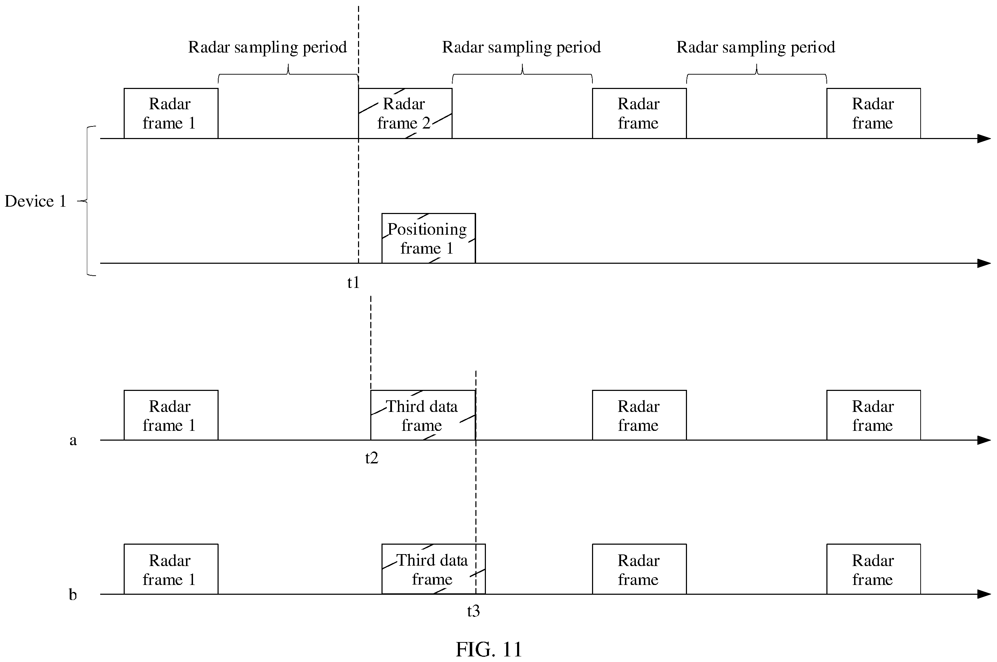

For example, the device 1 has a positioning function and a radar sensing function. The device 1 may periodically transmit radar frames. For example, the device 1 transmits radar frames every 50 ms. Duration of the radar frame is, for example, 50 µs, and duration of the positioning frame is 500 µs. Refer to FIG. 11. After transmitting a radar frame 1, the device 1 may transmit a radar frame 2 at a moment t1 at an interval of 50 ms. However, if the electronic device detects that the radar frame 2 overlaps a to-be-transmitted positioning frame 1, the electronic device may transmit "a third data frame designed in the first case to the third case", to achieve an objective of concurrently transmitting the positioning frame and the radar frame.

The radar frame should have been transmitted at the moment t1. Refer to a in FIG. 11. If the electronic device transmits the third data frame by arranging the radar frame at the head of the positioning frame, the radar frame is transmitted at a moment t2, and a transmission moment of the radar frame is later than the moment t1. Refer to b in FIG. 11. If the electronic device transmits the third data frame by arranging the radar frame at the tail of the positioning frame, the radar frame is transmitted at a moment t3, a transmission moment of the radar frame is later than the moment t1, and the moment t3 and the moment t1 are separated by duration of one positioning frame. Transmission of the radar frame shown in FIG. 11 causes a change of the original transmission period of the radar frame, affecting radar sensing accuracy.

In embodiments of this application, a structure of a data frame is designed, and the original transmission period of the radar frame may not be changed. To be specific, a transmission moment of a radar frame is the same as an original transmission moment of the radar frame, and the radar frame is punctured to embed content of a positioning frame in the radar frame, to improve radar sensing accuracy.

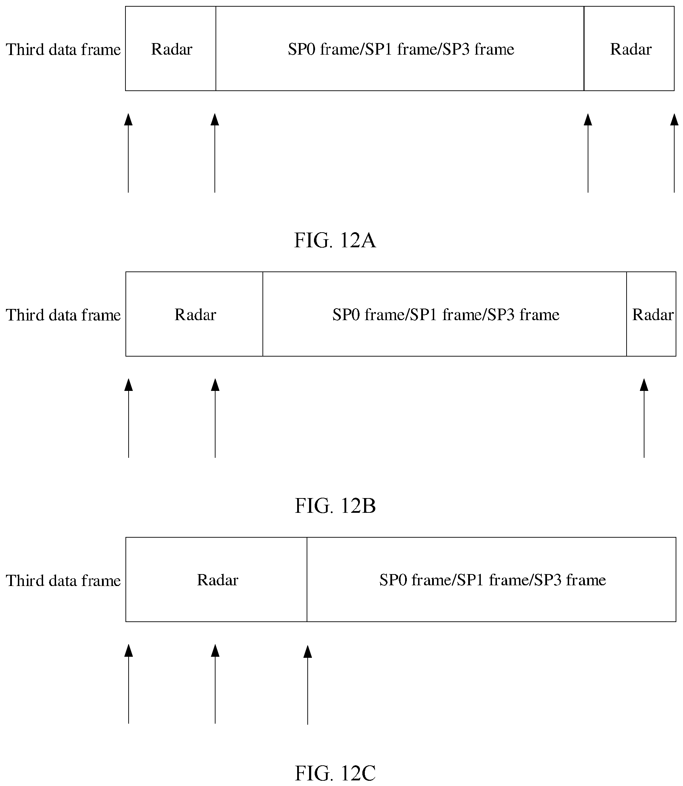

In an embodiment, the content of the positioning frame may be embedded at a preset position in the radar frame to obtain a third data frame. Refer to FIG. 12A. The electronic device may arrange a positioning frame at a first preset position of the radar frame, to obtain a third data frame. Alternatively, refer to FIG. 12B. The electronic device may arrange a positioning frame at a second preset position of the radar frame, to obtain a third data frame. It should be understood that the first preset position is different from the second preset position.

In this embodiment, a sum of duration of two parts of the radar frame shown in FIG. 12A and a sum of duration of two parts of the radar frame shown in FIG. 12B are both equal to duration of the radar frame shown in FIG. 11, for example, 50 µs. In other words, in this embodiment of this application, although the electronic device punctures the radar frame and embeds the content of the positioning frame in the radar frame, a structure and a modulation scheme of the positioning frame are not changed, and duration and a modulation scheme of the radar frame are not changed.

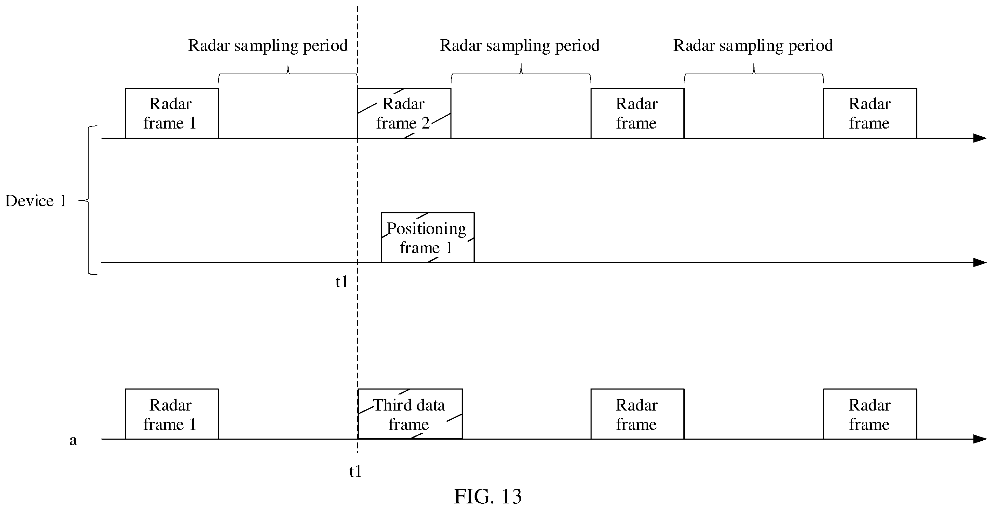

In this embodiment, compared with FIG. 11, in FIG. 13, after transmitting the radar frame 1, the device 1 may transmit the radar frame 2 at an interval of 50 ms. However, if the electronic device detects that the radar frame 2 overlaps the to-be-transmitted positioning frame 1, the electronic device may transmit, based on structures of the third data frames shown in FIG. 12A and FIG. 12B, the third data frames shown in FIG. 12A and FIG. 12B at a start moment (for example, the moment t1) of the radar frame 2. This can ensure that the original transmission period of the radar frame remains unchanged, radar sensing accuracy is not affected, and radar sensing accuracy is high. In an embodiment, as shown in FIG. 12C, when it is ensured that a start moment of the radar frame remains unchanged, the positioning frame may be arranged to be transmitted after the radar frame.

In an embodiment, a structure of a data frame is further designed in this embodiment of this application, and an original transmission period of a radar frame may not be changed, that is, when it is ensured that a transmission moment of a radar frame is the same as an original transmission moment of the radar frame, the radar frame is embedded in a positioning frame for transmission. For example, if the positioning frame is transmitted before the radar frame, and the positioning frame overlaps the radar frame, the positioning frame and the radar frame need to be transmitted concurrently. In this embodiment of this application, the radar frame may be embedded in the positioning frame, and it is ensured that the transmission moment of the radar frame is the same as the original transmission moment of the radar frame. For a manner of embedding the radar frame in the positioning frame, refer to descriptions in FIG. 10A to FIG. 10I. In other words, in this embodiment of this application, a structure of the third data frame in FIG. 10A to FIG. 10I may be reused on a premise of ensuring that the transmission moment of the radar frame is the same as the original transmission moment of the radar frame.

In an embodiment, in a scenario in which the positioning frame and the radar frame need to be transmitted concurrently, the electronic device may transmit a third data frame shown in any one of FIG. 12A to FIG. 12C. In an embodiment, the electronic device may further transmit the third data frame shown in any one of FIG. 10A to FIG. 10I. Refer to related descriptions in the foregoing embodiments.

In embodiments of this application, a structure of a radar frame and a frame structure in which a radar frame and a positioning frame coexist are designed. This can implement concurrent transmission of the positioning frame and the radar frame, without a need to perform switching between a positioning function and a radar sensing function, and avoid missed transmission of the radar frame and the positioning frame, so that positioning accuracy and radar sensing accuracy are high. In addition, in embodiments of this application, the frame structure in which the radar frame and the positioning frame coexist is correspondingly designed for an SP0 frame, an SP1 frame, and an SP3 frame, so that a non-secure positioning function and the radar sensing function can coexist, and a security positioning function and the radar sensing function can coexist. In addition, in embodiments of this application, the radar frame may be further punctured to embed the content of the positioning frame. This can ensure that the transmission moment of the radar frame remains unchanged, to ensure that the original transmission period of the radar frame remains unchanged, and radar sensing accuracy is high.

The foregoing embodiments describe a structure design of the data frame. Herein, a process in which the electronic device performs positioning and radar sensing is described with reference to the structure design of the data frame.

In this embodiment of this application, a structure of an electronic device may be shown in FIG. 1B. A processor of the electronic device has a function of processing UWB communication signaling and data, and a function of processing a radar pulse, so that the electronic device has both a positioning function and a radar sensing function. The processor controls a receiver and a transmitter as described below.

A positioning frame transmitted by the electronic device is received by another electronic device, and a radar pulse transmitted by the electronic device is received by the electronic device. In an embodiment, the electronic device may control the transmitter and the receiver to be turned on in a time-division manner, and configure a maximum gain. For example, when the electronic device transmits only a radar frame, after transmitting the radar frame, the electronic device may turn on the receiver and turn off the transmitter, to receive a radar reflected wave. When the electronic device transmits a third data frame, because the electronic device knows a transmission moment of the radar frame, the electronic device may turn on the receiver after transmitting the radar frame, to receive a radar reflected wave.

In an embodiment, the transmitter and the receiver in the electronic device are always in a turned-on state, and a maximum gain is configured. For example, when the electronic device transmits only a radar frame or a third data frame, after transmitting the radar frame, the electronic device may receive a radar reflected wave by using the receiver.

In this way, in this embodiment of this application, the electronic device can control the transmitter and the receiver to be always turned on, or control the transmitter and the receiver to be turned on in a time-division manner, so that both the positioning function and the radar sensing function can be implemented.

It should be understood that, in the foregoing embodiments, the IR-UWB technology is used as an example to describe the design of the frame structure in which the positioning frame and the radar frame are or are not transmitted concurrently. In an embodiment, the structure of the data frame in the foregoing embodiments may be further applied to a sensing technology based on another cellular protocol or a short-range communication protocol.

For example, in a sensing technology based on a Wi-Fi communication protocol, a data frame for positioning may be a Wi-Fi data frame. For a structure of the Wi-Fi data frame, refer to related descriptions in a Wi-Fi communication protocol. A frame structure for radar positioning may adapt to the structure of the Wi-Fi data frame, to implement concurrent transmission of a radar frame and a positioning frame. Alternatively, a radar frame is punctured to embed the Wi-Fi data frame in the radar frame. Refer to related descriptions in the foregoing embodiments. In some examples, the data frame for positioning may include a field for carrying encrypted data, for example, an STS field in the SP1 frame or the SP3 frame may include the encrypted data.

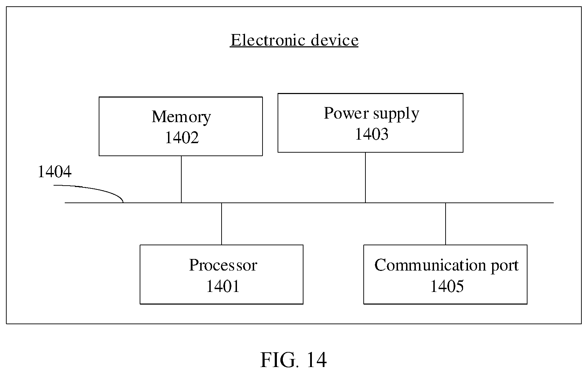

In an embodiment, an embodiment of this application further provides an electronic device, and the electronic device may be the electronic device in the foregoing embodiments. Refer to FIG. 14. The electronic device may include a processor 1401 (for example, a CPU) and a memory 1402. The memory 1402 may include a high-speed random access memory (random access memory, RAM), or may further include a non-volatile memory (non-volatile memory, NVM), for example, at least one disk memory. The memory 1402 may store various instructions, to complete various processing functions and implement the method steps of this application.

Optionally, the electronic device in this application may further include a power supply 1403, a communication bus 1404, and a communication port 1405. The communication port 1405 is configured to implement connection and communication between the electronic device and another peripheral. In this embodiment of this application, the memory 1402 is configured to store computer-executable program code. The program code includes instructions. The processor 1401 executes the instructions, to enable the processor 1401 of the electronic device to perform the actions in the foregoing method embodiments. Implementation principles and technical effect are similar to those described above. Details are not described herein again.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling program code, the processing element may be a general-purpose processor, for example, a central processing unit (central processing unit, CPU) or another processor, such as a controller, that may invoke the program code. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in descriptions of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A communication method, applied to an electronic device, wherein the method comprises:
determining whether a first data frame and a second data frame need to be transmitted concurrently, wherein the first data frame is used by the electronic device to perform positioning, and the second data frame is used by the electronic device to perform radar sensing; and
if the first data frame and the second data frame need to be transmitted concurrently, transmitting a third data frame, wherein the third data frame comprises content of the first data frame and content of the second data frame.

2. The method according to claim 1, wherein before the transmitting a third data frame, the method further comprises:
embedding the content of the second data frame at a preset position in the first data frame, to obtain the third data frame; or
arranging the content of the second data frame at the head or the tail of the first data frame, to obtain the third data frame; or
embedding the content of the first data frame at a preset position in the second data frame, to obtain the third data frame.

3. The method according to claim 1 or 2, wherein the first data frame comprises a preamble sequence, and in the third data frame, the content of the second data frame is before the preamble sequence.

4. The method according to claim 1 or 2, wherein the first data frame comprises a payload, and in the third data frame, the content of the second data frame is after the payload.

5. The method according to claim 1 or 2, wherein the first data frame comprises encrypted data, and in the third data frame, the content of the second data frame is after the encrypted data.

6. The method according to claim 1 or 2, wherein the first data frame comprises encrypted data, the encrypted data comprises at least two segments, and at least one segment in encrypted data of the third data frame is used to carry the content of the second data frame.

7. The method according to claim 5 or 6, wherein the encrypted data is a scrambled timestamp sequence.

8. The method according to claim 3 or 4, wherein the first data frame is an SP0 frame.

9. The method according to claim 3 or any one of claims 5 to 7, wherein the first data frame is an SP3 frame.

10. The method according to any one of claims 3 to 7, wherein the first data frame is an SP1 frame.

11. The method according to claim 2, wherein the arranging the content of the second data frame at the head or the tail of the first data frame comprises:
if the first data frame is earlier than the second data frame, arranging the content of the second data frame at the tail of the first data frame; or
if the first data frame is later than the second data frame, arranging the content of the second data frame at the head of the first data frame.

12. The method according to any one of claims 1 to 11, wherein the determining whether a first data frame and a second data frame need to be transmitted concurrently comprises:
when transmitting the first data frame, detecting whether there is a to-be-transmitted second data frame overlapping the first data frame; and
if there is a to-be-transmitted second data frame overlapping the first data frame, determining that the first data frame and the second data frame need to be transmitted concurrently; or
when transmitting the second data frame, detecting whether there is a to-be-transmitted first data frame overlapping the second data frame; and
if there is a to-be-transmitted first data frame overlapping the second data frame, determining that the first data frame and the second data frame need to be transmitted concurrently.

13. The method according to any one of claims 1 to 12, wherein the method further comprises:
when the first data frame and the second data frame do not need to be transmitted concurrently, and only the second data frame needs to be transmitted, transmitting the second data frame.

14. The method according to any one of claims 1 to 13, wherein the content of the second data frame comprises a phase of a radar pulse, an interval between two adjacent radar pulses, duration of the radar pulse, and a modulation scheme of the radar pulse.

15. An electronic device, comprising a processor and a memory, wherein
the memory stores computer instructions; and
the processor executes the computer instructions stored in the memory, to enable the processor to perform the method according to any one of claims 1 to 14.

16. A computer-readable storage medium, wherein the computer-readable storage medium stores a computer program or instructions, and when the computer program or the instructions are run, the method according to any one of claims 1 to 14 is implemented.

17. A program product, wherein the program product comprises a computer program, the computer program is stored in a readable storage medium, at least one processor of a communication apparatus is capable of reading the computer program from the readable storage medium, and the at least one processor executes the computer program, to enable the communication apparatus to implement the method according to any one of claims 1 to 14.
